# EUROPEAN PATENT SPECIFICATION

(11) **EP 4 380 288 B1**
(45) Date of publication and mention of the grant of the patent: **28.01.2026**
(21) Application number: 22852098.7
(22) Date of filing: 30.07.2022
(51) Int. Cl.: H04W 74/08, H04B 17/318, H04B 17/382, H04L 5/00, H04W 52/24, H04B 7/06, H04W 52/14, H04W 52/32, H04W 24/10

(54) **CONFIGURATION PARAMETER UPDATE METHOD AND APPARATUS**
VERFAHREN UND VORRICHTUNG ZUR AKTUALISIERUNG VON KONFIGURATIONSPARAMETERN
PROCÉDÉ ET APPAREIL DE MISE À JOUR DE PARAMÈTRES DE CONFIGURATION

(30) Priority: 03.08.2021 CN 202110885642; 09.09.2021 CN 202111056418
(43) Date of publication of application: 05.06.2024
(73) Proprietor: Huawei Technologies Co., Ltd., Shenzhen, Guangdong 518129 (CN)
(72) Inventor: LI, Jun, Shenzhen, Guangdong 518129 (CN); LI, Xueru, Shenzhen, Guangdong 518129 (CN)
(74) Representative: Goddar, Heinz J.
(86) International application number: PCT/CN2022/109305
(87) International publication number: WO 2023/011385

(56) References cited:
- WO-A1-2020/193853
- CN-A- 107 889 145
- CN-A- 108 282 806
- CN-A- 109 392 156
- CN-A- 109 803 362
- CN-A- 112 218 383
- US-A1- 2019 116 514
- US-A1- 2020 267 684
- HUAWEI ET AL: "Discussion on IDLE and INACTIVE positioning", vol. RAN WG2, no. Electronic; 20210125 - 20210205, 15 January 2021 (2021-01-15), XP051974190, Retrieved from the Internet <URL:https://ftp.3gpp.org/tsg_ran/WG2_RL2/TSGR2_113-e/Docs/R2-2101225.zip R2-2101225 Discussion on IDLE and INACTIVE positioning.docx> [retrieved on 20210115]
- SAMSUNG: "Positioning in RRC inactive state", vol. RAN WG3, no. Electronic meeting; 20210517 - 20210527, 7 May 2021 (2021-05-07), XP052002230, Retrieved from the Internet <URL:https://ftp.3gpp.org/tsg_ran/WG3_Iu/TSGR3_112-e/Docs/R3-211983.zip R3-211983_Positioning in RRC inactive state.docx> [retrieved on 20210507]
- ERICSSON (EMAIL RAPPORTEUR): "Email report 105_56 - RRM related aspects for power saving", vol. RAN WG2, no. Xi'an, China; 20190408 - 20190412, 29 March 2019 (2019-03-29), XP051693385, Retrieved from the Internet <URL:http://www.3gpp.org/ftp/tsg%5Fran/WG2%5FRL2/TSGR2%5F105bis/Docs/R2%2D1904155%2Ezip> [retrieved on 20190329]

## Description

### TECHNICAL FIELD

This application relates to the field of communication technologies, and in particular, to a configuration parameter update method and an apparatus.

### BACKGROUND

In the fifth generation mobile communication technology, a radio resource control (Radio Resource Control, RRC) inactive state, namely, an RRC inactive state, is added for user equipment (User Equipment, UE). When the UE is in the RRC inactive state, the UE reduces power consumption in a discontinuous reception mode. That is, the UE periodically enters a sleep mode to save power. In addition, because a connection between a radio access network (Radio Access Network, RAN) and a core network and a context of a user are retained, after quickly restoring an air interface connection, the UE may immediately perform data transmission, thereby greatly shortening a control plane delay.

When the UE is in a connected state, that is, in an RRC connected state, a gNB configures, for the UE by using RRC signaling, a plurality of SRS sets used for positioning, where each SRS set has a path loss reference signal. The path loss reference signal of each SRS set may be set to a synchronization signal block (Synchronization Signal Block, SSB) reference signal of a serving cell or a non-serving cell. The gNB may determine, based on processes such as UE transmission, measurement reporting, and beam management, that a previously configured SSB reference signal beam is no longer suitable, and the gNB updates configuration parameters, namely, a beam direction and a power, of the SSB reference signal in a timely manner by using the RRC signaling, to ensure that the UE is handed over to a coverage area of a reconfigured SSB reference signal in a timely manner after moving beyond a coverage area of the previously configured SSB reference signal.

However, when the UE is in the RRC inactive state, the UE moves in a configured RNA without exchanging information with the gNB. Therefore, the gNB cannot update a configuration parameter for the SSB reference signal of the UE in a timely manner, and the UE sends an uplink SRS based on a configuration parameter configured before the movement. Consequently, effect of receiving the uplink SRS by the gNB is poor, and even the uplink SRS cannot be received.

The 3GPP document "Discussion on IDLE and INACTIVE positioning" by Huawei and HiSilicon, R2-2101225, Feb. 2021, describes mobility issues for uplink positioning in INACTIVE. This document describes the SRS configuration and its relation with the mobility of the UE in INACTIVE. Two approaches are described to enable the UE to continue transmitting SRS and ensure that the periodic positioning is not interrupted after UE performs cell reselection. In the first approach, the SRS configuration is updated whenever the UE performs cell reselection wherein, when the UE moves to another cell, the UE discards the previous configuration and establishes a connection with the network to request an update of the SRS configuration. In the second approach, the UE is configured with a positioning area, which includes multiple cells, within which the SRS resource provided in the RRCRelease message of the previous connection is valid, so that the UE can continue sending the SRS without the need to update the SRS configurations. In this approach, the SRS configurations configured to the UE are sent to the RAN nodes in the area of configured cells, which would reserve the resource for SRS reception.

### SUMMARY

This application provides a configuration parameter update method and an apparatus, so that a terminal in an RRC inactive state adjusts a beam direction and/or power of an uplink SRS in a timely manner without switching a status, to ensure that UE can send the uplink SRS based on an accurate beam direction and/or power. The invention is defined by the independent claims. Advantageous embodiments of the invention are given by the dependent claims.

According to a first aspect, an embodiment of this application provides a configuration parameter update method. The method is applicable to a terminal device, or may be applied to a chip in a terminal device. In the method, when detecting that a first signal power of a first reference signal is less than a preset power, a terminal in an RRC inactive state measures candidate reference signals corresponding to candidate configuration parameters; determines, from the candidate reference signals, a first candidate reference signal that meets a preset condition, and sends a signal parameter of the first candidate reference signal to a first serving base station; and determines a transmit beam of an uplink positioning reference signal based on the signal parameter of the first candidate reference signal, and/or determines a transmit power of the uplink positioning reference signal based on a signal power measurement result of the first candidate reference signal.

In the foregoing manner, without switching the status, the terminal in the RRC inactive state obtains, through measurement by using the candidate configuration parameters, a candidate reference signal that meets a signal power condition, and adjusts the beam direction and/or power of the uplink SRS based on the candidate reference signal, to ensure that UE can send the uplink SRS based on an accurate beam direction and/or power.

In a possible design, when in a radio access network-based notification area RNA, the terminal in the RRC inactive state switches from accessing a previous serving base station to accessing the first serving base station, and sends the signal parameter of the first candidate reference signal to the first serving base station.

In a possible design, the terminal adds the signal parameter of the first candidate reference signal as positioning assistance information to a random access MSG3 message, and sends the positioning assistance information to the first serving base station by using the random access MSG3 message, where the positioning assistance information is used to help a base station participating in positioning determine a receive beam of the uplink positioning reference signal. In this manner, the terminal may quickly send the positioning assistance information to the base station participating in positioning.

In a possible design, the terminal may encapsulate the positioning assistance information in an MSG3 container. In this manner, a process in which the first serving base station demodulates the positioning assistance information can be reduced, to ensure that the positioning assistance information can be accurately forwarded to the base station participating in positioning.

In a possible design, the method further includes:
when the terminal is in an RRC connected state, receiving radio resource control RRC signaling that includes a preconfigured parameter and the candidate configuration parameters and that is delivered by a second serving base station, where the preconfigured parameter is used to measure the first reference signal, and the candidate configuration parameters are used to measure the candidate reference signals. In this manner, before switching to the RRC inactive state, the terminal configures the candidate configuration parameters in advance, so that the terminal can measure the candidate reference signals based on the candidate configuration parameters.

In a possible design, the preconfigured parameter includes a cell identifier, an SSB index, and SSB configuration information, where the SSB configuration information includes an SSB time-frequency resource location, a period, and a power parameter. The candidate configuration parameter includes an SSB index different from that of the preconfigured parameter.

In a possible design, the determining, from the candidate reference signals, a first candidate reference signal that meets a preset condition includes: The terminal measures signal powers of all the candidate reference signals corresponding to the candidate configuration parameters; and the terminal determines a candidate reference signal corresponding to a maximum signal power among all the signal powers, and determines the candidate reference signal corresponding to the maximum signal power as the first candidate reference signal. An optimal beam direction of the uplink positioning reference signal of the terminal may be determined by using the candidate reference signal of the maximum signal power.

In a possible design, the determining, from the candidate reference signals, a first candidate reference signal that meets a preset condition includes: comparing signal power measurement results of the candidate reference signals in the candidate configuration parameters with a preset power one by one; and when it is obtained through measurement that a signal power of an N^{th} candidate reference signal is greater than the preset power, determining the N^{th} candidate reference signal as the first candidate reference signal, and stopping measuring another candidate reference signal. In this manner, a candidate reference signal that meets a signal power requirement can be quickly positioned, and measurement performed by the terminal on the candidate reference signals is reduced.

In a possible design, when the terminal has a beamforming capability, the terminal measures the candidate reference signals by switching different receive beams; or when the terminal does not have a beamforming capability, the terminal directly measures the candidate reference signals.

In a possible design, the terminal measures the first candidate reference signal by using different receive beams, and determines the transmit beam of the uplink positioning reference signal based on a receive beam detection corresponding to a maximum measurement result. In this manner, a beam direction of the uplink positioning reference signal of the terminal can be ensured.

In a possible design, the determining a transmit power of the uplink positioning reference signal based on a signal power measurement result of the first candidate reference signal includes: determining a first transmit power based on a transmit power of the first candidate reference signal and the signal power measurement result of the first candidate reference signal; and sending the uplink positioning reference signal based on the first transmit power. In this manner, the transmit power of the uplink positioning reference signal can be accurately adjusted.

In a possible design, the uplink positioning reference signal is an uplink sounding reference signal.

According to a second aspect that is not covered by the claims, an embodiment of this application provides a signal processing method. The method is applicable to a base station, or may be applied to a chip in a base station. In the method, when a terminal is in an RRC connected state, a current serving base station generates radio resource control RRC signaling including a preconfigured parameter and candidate configuration parameters, and delivers the RRC signaling to the terminal, so that the terminal measures a reference signal based on the preconfigured parameter and the candidate configuration parameters. In this manner, before switching to the RRC inactive state, the terminal configures the candidate configuration parameters in advance, so that the terminal can measure the candidate reference signals based on the candidate configuration parameters.

In a possible design, after the RRC signaling is delivered to the terminal, the method includes: The current serving base station receives a random access MSG3 message that is sent by a terminal in an RRC inactive state and that includes positioning assistance information; and forwards the positioning assistance information to each base station participating in positioning, so that each base station participating in positioning adjusts a receive beam based on the positioning assistance information.

In a possible design, the current serving base station demodulates the positioning assistance information to obtain a base station identifier of each base station participating in positioning; and forwards, through a specified interface, the positioning assistance information to each base station corresponding to the base station identifier. In this manner, the current serving base station may directly forward the positioning assistance information to each base station participating in positioning.

In a possible design, the current serving base station directly forwards the positioning assistance information encapsulated in an MSG3 container to a location management function LMF without demodulating the positioning assistance information, to forward, by using the LMF, the positioning assistance information to each base station participating in positioning.

In a possible design, the current serving base station is a base station in a radio access network-based notification area RNA, and the terminal is a terminal that is in the RNA and that switches from accessing a previous serving base station to accessing the current serving base station.

According to a third aspect, an embodiment of this application provides a communication apparatus. The communication apparatus may be a terminal device or a chip disposed in a terminal device. The communication apparatus has a function of implementing the first aspect. For example, the communication apparatus includes a corresponding module, unit, or means (means) for performing the steps in the first aspect. The function, unit, or means may be implemented by software or hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to receive configuration information from a terminal device. The processing unit may be configured to perform some internal operations of the communication apparatus. Functions performed by the processing unit and the communication unit may correspond to the operations in the first aspect.

In a possible design, the communication apparatus includes a processor, and may further include a transceiver. The transceiver is configured to receive and send a signal. The processor executes program instructions to complete the method in the first aspect. The communication apparatus may further include one or more memories. The memory is configured to be coupled to the processor, and the memory may store a necessary computer program or necessary instructions for implementing the functions in the first aspect. The processor may execute the computer programs or the instructions stored in the memory. When the computer programs or the instructions are executed, the communication apparatus is enabled to implement the method in the possible designs or implementations of the first aspect.

In a possible design, the communication apparatus includes a processor, and the processor may be configured to be coupled to a memory. The memory may store a necessary computer program or necessary instructions for implementing the functions in the first aspect. The processor may execute the computer programs or the instructions stored in the memory. When the computer programs or the instructions are executed, the communication apparatus is enabled to implement the method in the designs or implementations of the first aspect.

In a possible design, the communication apparatus includes a processor and an interface circuit, and the processor is configured to: communicate with another apparatus through the interface circuit, and perform the method in the designs or implementations of the first aspect.

According to a fourth aspect that is not covered by the claims, an embodiment of this application provides a communication apparatus. The communication apparatus may be a base station or a chip disposed in a base station. The communication apparatus has a function for implementing the second aspect. For example, the communication apparatus includes a corresponding module, unit, or means for performing the operations in the second aspect. The module, unit, or means may be implemented by software or hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to deliver RRC signaling to a terminal. The processing unit may be configured to perform some internal operations of the communication apparatus. Functions performed by the processing unit and the communication unit may correspond to the operations in the second aspect.

In a possible design, the communication apparatus includes a processor, and the processor may be configured to be coupled to a memory. The memory may store a necessary computer program or necessary instructions for implementing the functions in the second aspect. The processor may execute the computer programs or the instructions stored in the memory. When the computer programs or the instructions are executed, the communication apparatus is enabled to implement the method in the designs or implementations of the second aspect.

In a possible design, the communication apparatus includes a processor and a memory. The memory may store a necessary computer program or necessary instructions for implementing a function in the second aspect. The processor may execute the computer programs or the instructions stored in the memory. When the computer programs or the instructions are executed, the communication apparatus is enabled to implement the method in the designs or implementations of the second aspect.

In a possible design, the communication apparatus includes a processor and an interface circuit, and the processor is configured to: communicate with another apparatus through the interface circuit, and perform the method in the designs or implementations of the second aspect.

It may be understood that in the third aspect or the fourth aspect, the processor may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be separately disposed on different chips. A type of the memory and a manner in which the memory and the processor are disposed are not limited in embodiments of this application.

According to a fifth aspect, an embodiment of this application provides a communication system. The communication system may include a terminal device and a base station. The terminal device may be configured to perform the method in any possible design of the first aspect, and the base station may be configured to perform the method in any possible design of the second aspect.

According to a sixth aspect, this application provides a computer-readable storage medium. The computer storage medium stores computer-readable instructions. When a computer reads and executes the computer-readable instructions, the computer is enabled to perform the method in any one of the possible designs of the first aspect and the second aspect.

According to a seventh aspect, this application provides a computer program product. When a computer reads and executes the computer program product, the computer is enabled to perform the method in any one of the possible designs of the first aspect and the second aspect.

According to an eighth aspect, this application provides a chip. The chip includes a processor. The processor is coupled to a memory to read and execute a software program stored in the memory, to implement the method in any one of the possible designs of the first aspect and the second aspect.

These aspects or other aspects of this application are more brief and comprehensible in descriptions of the following embodiments.

### BRIEF DESCRIPTION OF DRAWINGS

FIG. 1 is a schematic diagram of a network architecture to which an embodiment of this application is applicable;
FIG. 2a is a schematic diagram of a CU-DU split architecture according to an embodiment of this application;
FIG. 2b is a schematic diagram of another CU-DU split architecture according to an embodiment of this application;
FIG. 3 is a schematic diagram of preconfigured parameters according to an embodiment of this application;
FIG. 4 is a flowchart of a configuration parameter update method according to an embodiment of this application;
FIG. 5 is a schematic diagram of a preconfigured parameter and candidate configuration parameters according to an embodiment of this application;
FIG. 6 is a schematic diagram of another preconfigured parameter and other candidate configuration parameters according to an embodiment of this application;
FIG. 7 is a flowchart of a signal processing method according to an embodiment of this application;
FIG. 8 is a flowchart of another signal processing method according to an embodiment of this application;
FIG. 9 is a schematic diagram of information exchange between a terminal and a base station according to an embodiment of this application;
FIG. 10 is another schematic diagram of information exchange between a terminal and a base station according to an embodiment of this application;
FIG. 11 is a schematic diagram of a structure of a communication apparatus according to an embodiment of this application; and
FIG. 12 is a schematic diagram of a structure of another communication apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that, in descriptions of this application, "a plurality of" is understood as "at least two". The term "and/or" describes an association relationship for describing associated objects and represents that three relationships may exist. For example, A and/or B may represent the following three cases: Only A exists, both A and B exist, and only B exists. That A is connected to B may represent two cases: A is directly connected to B, and A is connected to B by using C. In addition, in the descriptions of this application, terms such as "first" and "second" are merely used for distinguishing and description, and cannot be understood as an indication or implication of relative importance or an indication or implication of an order.

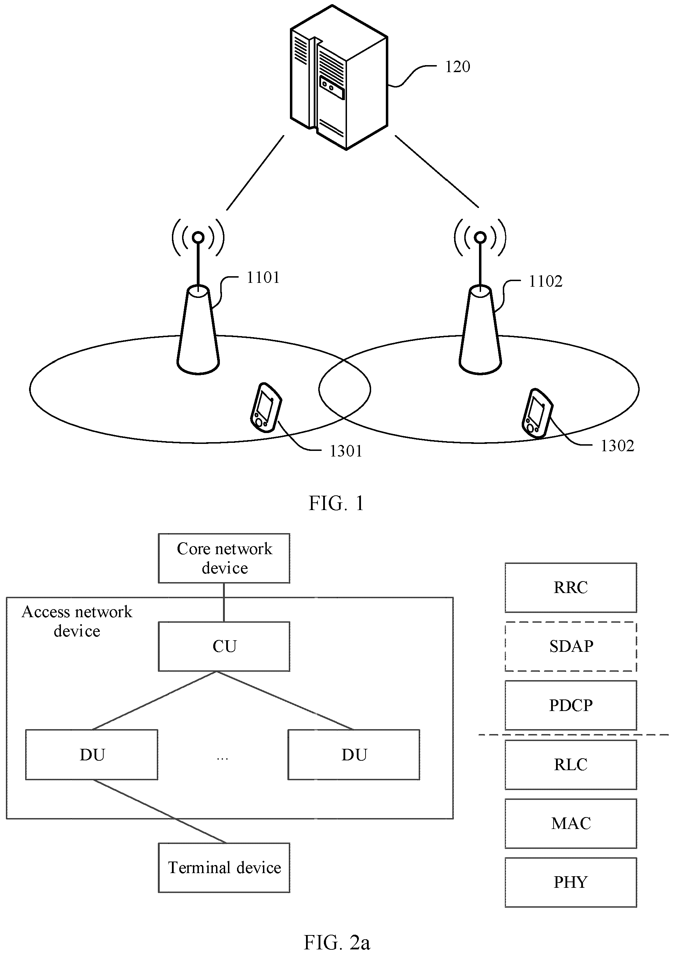

FIG. 1 is a schematic diagram of a network architecture to which an embodiment of this application is applicable. As shown in FIG. 1, a terminal device (for example, a terminal device 1301 or a terminal device 1302) may access a radio network, to obtain a service of an external network (for example, a data network (data network, DN)) via the radio network, or communicate with another device via the radio network, for example, may communicate with another terminal device. The radio network includes a radio access network (radio access network, RAN) and a core network (core network, CN). The RAN may also be referred to as an access network (access network, AN), and is configured to connect the terminal device to the radio network. The CN is configured to: manage the terminal device and provide a gateway for communicating with the DN.

The RAN may include one or more access network devices, for example, an access network device 1101 and an access network device 1102. The CN may include one or more core network elements, for example, a core network element 120.

The following separately describes the terminal device, the access network device, and the core network element in detail.

### 1. Terminal device

The terminal device may also be referred to as user equipment (user equipment, UE), and includes a device that provides a user with voice and/or data connectivity, for example, may include a handheld device with a wireless connection function, or a processing device connected to a wireless modem. The terminal device may communicate with a core network through a radio access network (radio access network, RAN), and exchange a voice and/or data with the RAN. The terminal device may include a wireless terminal device, a mobile terminal device, a device-to-device (device-to-device, D2D) terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit, a subscriber station, a mobile station, a remote station, an access point (access point, AP), a remote terminal, an access terminal, a user terminal, a user agent, user equipment, or the like. For example, the terminal device may include a mobile phone (or referred to as a "cellular" phone), a computer having a mobile terminal device, or a portable, pocket-sized, hand-held, or a computer-embedded mobile apparatus. For example, it may be a device like a personal communication service (personal communication service, PCS) phone, a cordless phone, a session initiation protocol (session initiation protocol, SIP) phone set, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability. For example, the terminal device includes an information sensing device like a barcode, radio frequency identification (radio frequency identification, RFID), a sensor, a global positioning system (global positioning system, GPS), or a laser scanner.

In embodiments of this application, an apparatus configured to implement a function of the terminal device may be a terminal device, or may be an apparatus that can support the terminal device in implementing the function, for example, a chip system, or a combined component or device that can implement the function of the terminal device. The apparatus may be installed in the terminal device. In embodiments of this application, the chip system may include a chip, or may include a chip and another discrete component. In the technical solutions provided in embodiments of this application, an example in which an apparatus configured to implement a function of a terminal is a terminal device is used to describe the technical solutions provided in embodiments of this application.

### 2. Access network device

The access network device is a node or a device that connects a terminal device to a radio network, and the access network device may also be referred to as a base station. The access network device includes, for example, but is not limited to, a next-generation NodeB (generation NodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB (HeNB) or home NodeB (HNB)), a baseband unit (baseband unit, BBU), a transmitting and receiving point (transmitting and receiving point, TRP), a transmitting point (transmitting point, TP), or a mobile switching center in a 5G communication system.

In embodiments of this application, an apparatus configured to implement a function of the access network device may be an access network device, or may be an apparatus that can support the access network device in implementing the function, for example, a chip system, or a combined component or device that can implement the function of the access network device. The apparatus may be installed in the access network device. In the technical solutions provided in embodiments of this application, the technical solutions provided in embodiments of this application are described by using an example in which the apparatus configured to implement the function of the access network device is the access network device.

An interface between the access network device and the terminal device may be a Uu interface (or referred to as an air interface). Certainly, in future communication, names of these interfaces may remain unchanged, or may be replaced by other names. This is not limited in this application. For example, communication between the access network device and the terminal device is performed in accordance with a specific protocol layer structure. For example, a control plane protocol layer structure may include an RRC layer, a packet data convergence protocol (packet data convergence protocol, PDCP) layer, a radio link control (radio link control, RLC) layer, a media access control (media access control, MAC) layer, and a physical layer. A user plane protocol layer structure may include a PDCP layer, an RLC layer, a MAC layer, and a physical layer. In a possible implementation, a service data adaptation protocol (service data adaptation protocol, SDAP) layer may be further included above the PDCP layer.

The access network device may implement functions of the protocol layers such as the RRC layer, the PDCP layer, the RLC layer, and the MAC layer through one node or a plurality of nodes. For example, in an evolved structure, the access network device may include one or more central units (centralized units, CUs) and one or more distributed units (distributed units, DUs), and a plurality of DUs may be centrally controlled by one CU. For example, an interface between the CU and the DU may be referred to as an F1 interface. A control plane (control plane, CP) interface may be an F1-C interface, and a user plane (user plane, UP) interface may be an F1-U interface. Division may be performed for the CU and the DU based on protocol layers of a radio network. For example, as shown in FIG. 2a, functions of the PDCP layer and a protocol layer above the PDCP layer are set on the CU, and functions of protocol layers (for example, the RLC layer and the MAC layer) below the PDCP layer are set on the DU.

It may be understood that, division of processing functions of the CU and the DU based on the protocol layers is merely an example, and the processing functions may alternatively be divided in another manner. For example, functions of the protocol layers above the RLC layer are set on the CU, and functions of the RLC layer and the protocol layers below the RLC layer are set on the DU. For another example, the CU or the DU may be further divided into functions having more protocol layers. For another example, the CU or the DU may be further divided into some processing functions having protocol layers. In a design, some functions of the RLC layer and functions of the protocol layers above the RLC layer are set on the CU, and remaining functions of the RLC layer and functions of the protocol layers below the RLC layer are set on the DU. In another design, division of functions of the CU or the DU may alternatively be performed based on service types or other system requirements. For example, division may be performed based on latencies. Functions whose processing time needs to meet a delay requirement are set on the DU, and functions whose processing time does not need to meet the delay requirement are set on the CU. In another design, the CU may alternatively have one or more functions of the core network. For example, the CU may be set on a network side for ease of centralized management. The DU may have a plurality of radio frequency functions, or the radio frequency functions may be set remotely. This is not limited in embodiments of this application.

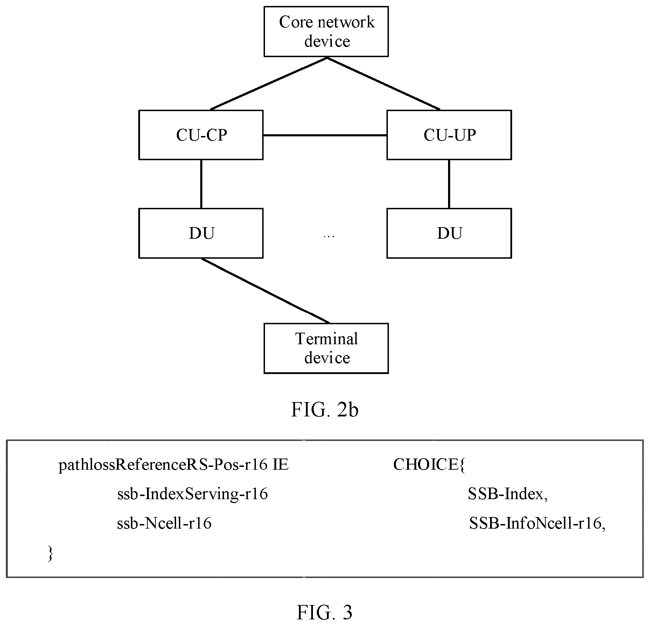

For example, the functions of the CU may be implemented by one entity or different entities. For example, as shown in FIG. 2b, the functions of the CU may be further divided. To be specific, a control plane and a user plane are split, and are implemented by using different entities: a control plane CU entity (namely, a CU-CP entity) and a user plane CU entity (namely, a CU-UP entity). The CU-CP entity and the CU-UP entity may be coupled to the DU, to jointly complete the function of the access network device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs.

It should be noted that, in the architectures shown in FIG. 2a and FIG. 2b, signaling generated by the CU may be sent to the terminal device via the DU, or signaling generated by the terminal device may be sent to the CU via the DU. The DU may transparently transmit the signaling to the terminal device or the CU by directly encapsulating the signaling at a protocol layer without parsing the signaling. In the following embodiments, if such signaling is transmitted between the DU and the terminal device, sending or receiving of the signaling by the DU includes this scenario. For example, signaling at the RRC layer or the PDCP layer is finally processed as data at a physical layer and sent to the terminal device, or is converted from received data at a physical layer. In this architecture, it may also be considered that the signaling at the RRC layer or the PDCP layer is sent by the DU, or sent by the DU and a radio frequency apparatus.

### 3. Core network element

A 5G communication system is used as an example. Core network elements in a CN may include an access and mobility management function (access and mobility management function, AMF) network element, a session management function (session management function, SMF) network element, a user plane function (user plane function, UPF) network element, a policy control function (policy control function, PCF) network element, and the like. This is not specifically limited.

The network architecture shown in FIG. 1 is applicable to communication systems of various radio access technologies (radio access technologies, RATs), for example, a 4G (or referred to as long term evolution (long term evolution, LTE)) communication system, or a 5G (or referred to as a new radio (new radio, NR)) communication system. Alternatively, the communication system may be a future communication system. The network architecture and the service scenario described in embodiments of this application are intended to describe the technical solutions in embodiments of this application more clearly. A person of ordinary skill in the art may know that, with evolution of the communication network architecture and emergence of new service scenarios, the technical solutions provided in embodiments of this application are also applicable to similar technical problems. An apparatus in the following embodiments of this application may be located in a terminal device or an access network device based on a function implemented by the apparatus. When the foregoing CU-DU structure is used, the access network device may be a CU, a DU, or an access network device including a CU and a DU.

In the network architecture shown in FIG. 1, a status of the terminal device may include an RRC idle state, an RRC inactive state, and an RRC connected state. The RRC idle state may be referred to as an idle state for short, the RRC inactive state may be referred to as an inactive state for short, or may be referred to as a third state, and the RRC connected state may be referred to as a connected state for short.

In embodiments of this application, when the terminal device is in the RRC connected state, there is an RRC connection between the terminal device and the access network device. In this case, the access network device knows that the terminal device is within a coverage area or a management range of the access network device. For example, the access network device knows that the terminal device is within a coverage area of a cell managed by the access network device. The core network knows a coverage area or a management range of a specific access network device in which the terminal device is located, and accordingly, the core network knows the specific access network device through which the terminal device can be positioned or found.

When the terminal device is in the idle state, there is no RRC connection between the terminal device and the access network device. In this case, the access network device does not know whether the terminal device is within a coverage area of the access network device or within a management range of the access network device. For example, the access network device does not know whether the terminal device is within a coverage area of a cell managed by the access network device. The core network does not know a coverage area or a management range of a specific access network device in which the terminal device is located, and accordingly, the core network does not know the specific access network device through which the terminal device can be positioned or found. When the terminal device is in the RRC idle state, the terminal device may receive a paging message, a synchronization signal, a broadcast message, system information, and/or the like from the access network device.

When the terminal device is in the RRC inactive state, there is no RRC connection between the terminal device and the access network device. In this case, the access network device does not know whether the terminal device is within a coverage area or a management range of the access network device. For example, the access network device does not know that the terminal device is within a coverage area of a cell managed by the access network device. The core network knows a coverage area or a management range of a specific access network device in which the terminal device is located, and accordingly, the core network knows the specific access network device through which the terminal device can be positioned or found. When the terminal device is in the RRC inactive state, the terminal device may receive a paging message, a synchronization signal, a broadcast message, system information, and/or the like from the access network device.

For the terminal device in the RRC inactive state, when the UE is in the RRC inactive state, the UE reduces power consumption in a discontinuous reception mode, that is, the UE periodically enters a sleep mode, to save power of the UE. In addition, because a connection between a RAN and a core network and a context of a user are retained, after quickly restoring an air interface connection, the UE may immediately perform data transmission, thereby greatly shortening a control plane delay.

To further reduce transmission overheads of a paging message, a radio access network-based notification area (RAN-based Notification Area, RNA) is introduced into a communication system. The RNA is used for mobility management of the UE in the RRC inactive state. The UE may move within a configured RNA without exchanging information with a gNB. The RNA may cover one or more gNBs. If the UE moves within a range of the configured RNA, the UE does not need to exchange information with the gNB. If the UE moves out of the range of the RNA, an RNA update process needs to be started, and the gNB may page the UE based on the RNA to find the UE.

To perform uplink positioning on the UE in the RRC inactive state, the gNB may preconfigure an uplink SRS by using RRC signaling when the UE enters the RRC inactive state, and position the UE in the RRC inactive state by using the SRS.

Specifically, a gNB configures, for the UE by using the RRC signaling, a plurality of SRS sets used for positioning, where each SRS set has a path loss reference signal. The path loss reference signal of each SRS set may be set to an SSB reference signal of a serving cell or a non-serving cell. An SSB reference signal is sent in a beam scanning manner. The path loss reference signal configured for each SRS set of the UE corresponds to an SSB beam of the serving cell or the non-serving cell. The UE may determine a path loss between the UE and the corresponding serving cell or non-serving cell based on signal strength of the SSB reference signal, so that the UE can adjust a transmit power based on the path loss when sending the uplink SRS. In addition, for UE that supports beamforming, the UE may adjust a receive beam to match a configured SSB beam direction. For example, the UE may measure the SSB reference signal in a beam scanning manner, and select a receive beam direction with a maximum power as a beam direction that matches the SSB reference signal. Therefore, when sending the uplink SRS, the UE may send the uplink SRS in the matched beam direction, and the gNB receives the uplink SRS in a corresponding beam direction, so that the gNB receives the uplink SRS.

To enable the gNB to perform uplink positioning on the UE in the RRC inactive state, the gNB may preconfigure an uplink sounding reference signal SRS by using RRC signaling pathlossReferenceRS-Pos-r16 IE when the UE enters the RRC inactive state, as shown in a schematic diagram of configuration parameters in FIG. 3. In FIG. 3, the gNB configures a parameter in each of ssb-IndexServing-r16 and SSB-Ncell-r16. When the gNB delivers RRC signaling, the gNB chooses to deliver the parameter configured in ssb-IndexServing-r16 or the parameter configured in SSB-Ncell-r16. The UE can send the SRS based on the parameter that is configured by using the RRC signaling. The gNB performs positioning on the UE in the RRC inactive state based on the uplink SRS.

However, when the UE is in the RRC inactive state, the UE moves in the configured RNA without exchanging information with the gNB. Therefore, the gNB cannot update the configuration parameter for the SSB reference signal of the UE in a timely manner. As a result, when the UE sends the uplink SRS based on a beam direction and a power that are configured before the movement, the gNB has a corresponding poor receiving effect, and even cannot receive the reference signal.

Based on the foregoing problem, this application provides a configuration parameter update method. In a manner of preconfiguring a preconfigured parameter and candidate configuration parameters for positioning an SRS by UE, it is ensured that after moving within a range of an RNA, the UE in the RRC inactive state can quickly determine a transmit power and/or a beam direction of the uplink SRS based on the candidate configuration parameter, and send the candidate configuration parameter to a gNB participating in positioning, so that the gNB participating in positioning can adjust a receive beam of the uplink SRS in a timely manner, thereby ensuring that the UE completes uplink positioning of the UE without switching a status.

The following describes the technical solutions of this application in detail with reference to the accompanying drawings and specific embodiments.

### Embodiment 1

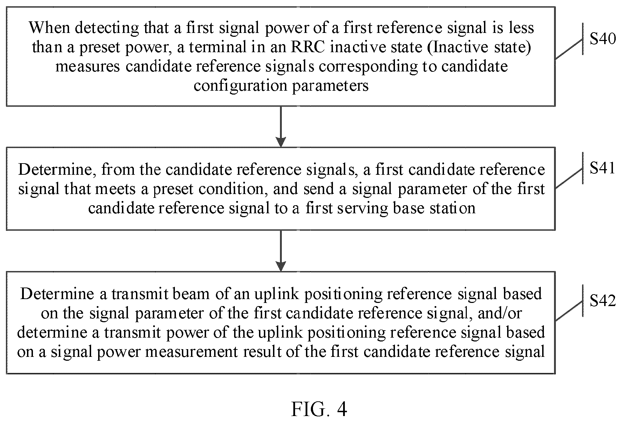

FIG. 4 shows a configuration parameter update method according to an embodiment of this application. The method includes the following steps.

S40: When detecting that a first signal power of a first reference signal is less than a preset power, a terminal in an RRC inactive state measures candidate reference signals corresponding to candidate configuration parameters.

First, before UE switches from an RRC connected state to the RRC inactive state, a second base station currently accessed by the UE delivers RRC signaling including a preconfigured parameter and candidate parameters. It should be noted herein that before the UE accesses the second base station, the UE accesses a first base station. After moving within a range of an RNA, the UE switches from accessing the first base station to accessing the second base station.

The preconfigured parameter in the RRC signaling is used to measure the first reference signal, and the candidate configuration parameters in the RRC signaling are used to measure the candidate reference signals. The preconfigured parameter includes a cell identifier, an SSB index (SSB index), and SSB configuration information, where the SSB configuration information includes an SSB time-frequency resource location, a period, and a power parameter. The candidate configuration parameter includes an SSB index different from that of the preconfigured parameter.

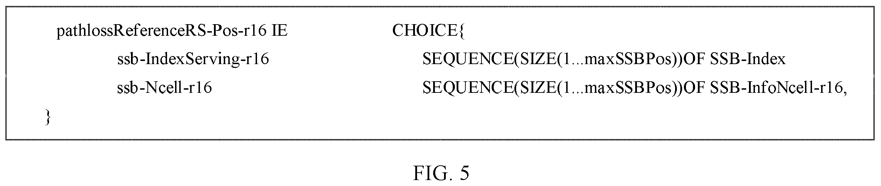

FIG. 5 shows the preconfigured parameter and the candidate configuration parameters in the RRC signaling. In this manner, the RRC signaling pathlossReferenceRS-Pos-r16 IE delivered by the gNB is extended, where a plurality of SSB-Indexes may be configured for ssb-IndexServing-r16. A first parameter is the pre-configured parameter, and subsequent configuration parameters following the first parameter are the candidate configuration parameters. In FIG. 5, a quantity of candidate configuration parameters is limited by using a maxSSBPos parameter.

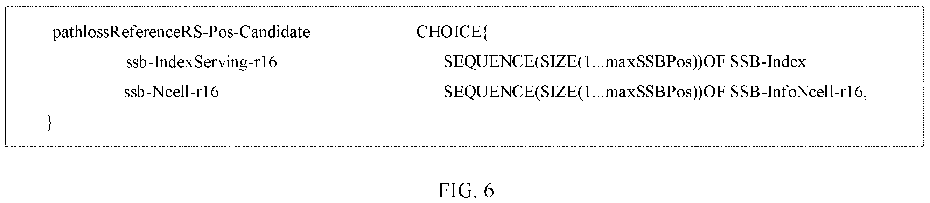

In a possible design, in addition to the manner of configuring the candidate configuration parameters shown in FIG. 5, the candidate configuration parameters may be further configured in a parameter configuration manner shown in FIG. 6. Specifically, in this manner, the preconfigured parameter is configured by using the existing pathlossReferenceRS-Pos-r16 IE, the candidate configuration parameters are configured in a new pathlossReferenceRS-Pos-Candidate IE, and a quantity of candidate configuration parameters is limited by using the maxSSBPos parameter.

It should be noted herein that the gNB delivers an SSB reference signal in a beam scanning manner. Therefore, by using a beam direction of the first reference signal as a center, beam directions of the candidate configuration parameters are separately extended to two sides of the beam direction of the first reference signal. Therefore, the reference signals corresponding to the candidate configuration parameters can cover a part that cannot be covered by the first reference signal, thereby ensuring that the UE can measure the candidate reference signals based on the candidate configuration parameters when moving in all directions within the range of the RNA.

After the UE configures the preconfigured parameter and the candidate configuration parameters by using the RRC signaling, when the UE enters the RRC inactive state, the UE first measures, by using the preconfigured parameter, the first reference signal sent by the gNB, to obtain the first signal power of the first reference signal and determine whether the first signal power is less than the preset power. When the power of the first signal is greater than the preset power, it indicates that a communication link between the UE and the gNB is stable. In this case, in some embodiments, measurement of the candidate reference signals is no longer started, step S41 and step S42 are no longer performed, and open-loop power control is performed on an uplink SRS at a UE end based on the first reference signal corresponding to the preconfigured parameter. In some other embodiments, when the first signal power is greater than the preset power, measurement of the candidate reference signals may alternatively be started, that is, step S41 and step S42 continue to be performed.

When the first signal power is less than the preset power, it indicates that a communication link between the UE and the gNB is poor. In this case, measurement of the candidate reference signals corresponding to the candidate configuration parameters is started.

In a possible embodiment, when it is detected that a signal power of the candidate reference signal is still less than the signal power of the first reference signal, the first reference signal is not updated, and step S41 and step S42 are no longer performed, that is, open-loop power control is performed on the uplink SRS at the UE end based on the first reference signal corresponding to the preconfigured parameter.

S41: Determine, from the candidate reference signals, a first candidate reference signal that meets a preset condition, and send a signal parameter of the first candidate reference signal to a first serving base station.

In this embodiment of this application, a plurality of candidate configuration parameters are configured. Therefore, a plurality of candidate reference signals may be measured by using the plurality of candidate configuration parameters. Signal powers corresponding to all the candidate reference signals are measured, and then the first candidate reference signal that meets the preset condition is screened out based on the signal powers. A specific screening manner is as follows.

Manner 1:

The signal powers of all the candidate reference signals corresponding to the candidate configuration parameters are measured, a candidate reference signal corresponding to a maximum signal power is determined among all the signal powers, and the candidate reference signal corresponding to the maximum signal power is determined as the first candidate reference signal. In this manner, an optimal beam direction may be determined for the UE based on the candidate reference signal with the maximum signal power, to ensure that subsequently, the UE can perform, based on a signal parameter of the candidate reference signal, accurate positioning on a beam direction for sending the uplink SRS.

Manner 2:

Signal power measurement results of all the candidate reference signals in the candidate configuration parameters are compared with a preset power one by one; and when it is obtained through measurement that a signal power of an N^{th} candidate reference signal is greater than the preset power, the N^{th} candidate reference signal is determined as the first candidate reference signal, and measurement of another candidate reference signal is stopped. In this manner, a candidate reference signal that meets link quality between the UE and the gNB can be quickly screened out, thereby reducing measurement performed by the UE on the candidate reference signals.

Based on the foregoing two candidate reference signal screening manners, a candidate reference signal that meets a signal power condition can be quickly and accurately measured, to ensure that the UE can accurately determine, based on a signal parameter of the candidate reference signal, the beam direction for sending the uplink SRS.

In a possible embodiment, when the UE has a beamforming capability, the UE measures the candidate reference signals by switching different receive beams, so that the UE can quickly and accurately measure the candidate reference signals by switching a beam direction; or when the UE does not have a beamforming capability, the UE directly measures the candidate reference signals.

Further, in this embodiment of this application, after determining the first candidate reference signal in all the candidate reference signals, the UE sends the signal parameter of the first candidate reference signal as positioning assistance information to the first serving base station. The signal parameter includes but is not limited to a cell identifier, an SSB index, and SSB configuration information.

It should be noted herein that the positioning assistance information is used to be sent to a gNB participating in UE positioning, so that the gNB participating in positioning can determine a receive beam of the uplink SRS based on the positioning assistance information.

Specifically, because the UE in the RRC inactive state does not exchange information with the gNB, when the UE adjusts a beam direction and a signal power based on the signal parameter of the determined first candidate reference signal, the gNB participating in UE positioning cannot obtain the signal parameter. Therefore, in this embodiment of this application, the UE sends the signal parameter corresponding to the first candidate reference signal as the positioning assistance information to the first serving base station, and then forwards, by using the first serving base station, the positioning assistance information to each gNB participating in positioning, so that each gNB participating in positioning adjusts a receive beam based on the positioning assistance information.

In a possible embodiment, because an RNA covers one or more gNBs, when the UE in the RRC inactive state moves in the area RNA, if the UE moves from a cell corresponding to a second serving base station to a cell corresponding to the first serving base station, the UE first switches from accessing the second serving base station to accessing the first serving base station, and sends the positioning assistance information to the first serving base station. If the UE does not move out of the cell covered by the second serving base station, the first serving base station and the second serving base station are a same base station.

Further, in this embodiment of this application, the UE may encapsulate the signal parameter of the first candidate reference signal into an RRC connection setup request message MSG3, that is, define a new resume cause in the MSG3, where the resume cause indicates to transmit the positioning assistance information. The UE sends the positioning assistance information to the first serving base station by using a random access MSG3. After receiving the MSG3, the first serving base station may demodulate the MSG3, to obtain a base station identifier Cell ID. The first serving base station forwards, based on the Cell ID, the positioning assistance information to each gNB participating in positioning.

In addition, in this embodiment of this application, to reduce a demodulation process of the first serving base station, the UE may encapsulate the positioning assistance information into an MSG3 container. After receiving the positioning assistance information, the first serving base station does not demodulate the positioning assistance information. Instead, the first serving base station directly transparently transmits the positioning assistance information to a location management function (Location Management Function, LMF), and then forwards the positioning assistance information to each gNB participating in positioning through the LMF.

Based on the foregoing method, without switching the status, the UE in the RRC inactive state measures the candidate reference signals by using the candidate configuration parameters, and adjusts the beam direction of the uplink SRS based on the candidate reference signal, to ensure that UE can send the uplink SRS in an accurate beam direction. In addition, the UE sends, as the positioning assistance information, the signal parameter corresponding to the candidate reference signal to each gNB participating in positioning, thereby ensuring that the gNB participating in positioning can adjust a receive beam of the uplink SRS in a timely manner. In this way, positioning of the UE in the RRC inactive state is implemented.

S42: Determine a transmit beam of an uplink positioning reference signal based on the signal parameter of the first candidate reference signal, and/or determine a transmit power of the uplink positioning reference signal based on a signal power measurement result of the first candidate reference signal.

In this embodiment of this application, a parameter of the uplink SRS of the UE may be adjusted in any one of the following three manners. Details are as follows.

### Manner 1:

In this embodiment of this application, the UE may measure, by using different receive beams, the first candidate reference signal corresponding to the maximum measurement result. The UE determines the transmit beam of the uplink SRS based on a receive beam direction of the first candidate reference signal, that is, sends the uplink SRS in the beam direction of the first candidate reference signal. In this manner, an optimal beam direction for sending the uplink SRS by the UE may be determined.

### Manner 2:

In this embodiment of this application, after the first candidate reference signal that meets the preset condition is obtained through measurement, a transmit power of the first reference signal is determined, a signal power measurement result of the first reference signal is determined, and a difference between the transmit power and the signal power measurement result is used as a power compensation value. A sum of a transmit power in a preconfigured parameter and the compensation value is used as a first transmit power, and the UE sends the SRS based on the first transmit power. In this manner, a transmit power of the uplink SRS can be ensured.

### Manner 3:

In this embodiment of this application, the UE may measure, by using different receive beams, the first candidate reference signal corresponding to the maximum measurement result. The UE determines the transmit beam of the uplink SRS based on a receive beam direction of the first candidate reference signal, determines a transmit power of the first reference signal and a signal power measurement result of the first reference signal, and uses a difference between the transmit power and the signal power measurement result as a power compensation value. A sum of a transmit power in a preconfigured parameter and the compensation value is used as a first transmit power, and the UE sends an SRS based on the first transmit power. In this manner, a beam direction and a transmit power for sending the uplink SRS by the UE can be ensured, to ensure that the gNB can accurately receive the SRS of the UE.

Based on the foregoing method, without switching the status, the UE in the RRC inactive state measures the candidate reference signals by using the candidate configuration parameters, and adjusts the beam direction of the uplink SRS based on the candidate reference signal, to ensure that UE can send the uplink SRS in an accurate beam direction.

### Embodiment 2

In Embodiment 2, this application provides a signal processing method. The method includes: When a terminal is in an RRC connected state, a current serving base station currently accessed by the terminal generates radio resource control RRC signaling including a preconfigured parameter and candidate configuration parameters, and delivers the RRC signaling to the terminal, so that when a signal power of a first reference signal corresponding to the preconfigured parameter is low, the terminal that switches to an RRC inactive state may measure, by using the candidate configuration parameter, a candidate reference signal that meets a signal power condition, to adjust a receive beam of an uplink SRS of the terminal in a timely manner based on the candidate reference signal, and ensure that a gNB can effectively receive the uplink SRS.

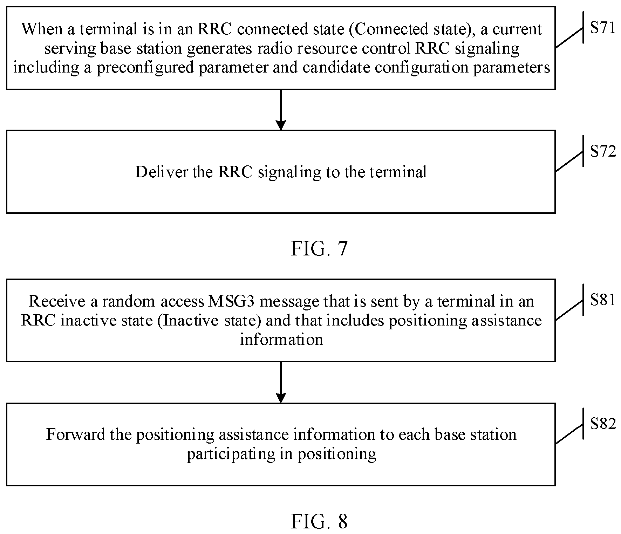

It can be learned from the content in Embodiment 1 that, when switching to the RRC inactive state, the UE needs to measure candidate reference signals by using the candidate configuration parameters. Therefore, before the UE switches to the RRC inactive state, the gNB needs to configure the candidate configuration parameters for the UE. The following describes a possible implementation process of the method with reference to FIG. 7.

Refer to FIG. 7. An embodiment of this application provides a signal processing method. The method includes the following steps.

S71: When a terminal is in an RRC connected state, a current serving base station generates radio resource control RRC signaling including a preconfigured parameter and candidate configuration parameters.

First, to ensure that the UE can measure a reference signal based on the preconfigured parameter and the candidate configuration parameters, the current serving base station generates RRC signaling including the pre-configured parameter and the candidate configuration parameters, and delivers the RRC signaling to the UE when the UE is in the RRC connected state. The preconfigured parameter and the candidate configuration parameters may be configured in either manner in FIG. 5 or FIG. 6. Details are not described herein again.

In addition, a gNB delivers an SSB reference signal in a beam scanning manner. Therefore, by using a beam direction of a reference signal corresponding to the preconfigured parameter as a center, beam directions of the candidate configuration parameters are separately extended to two sides. Therefore, the reference signals corresponding to the candidate configuration parameters can cover a part that cannot be covered by the first reference signal, thereby ensuring that the UE can measure the candidate reference signals based on the candidate configuration parameters when moving in all directions within a range of an RNA.

S72: Deliver the RRC signaling to the terminal.

For the UE in the RRC connected state, the current serving base station delivers the RRC signaling to the UE. In this case, the UE measures the reference signal based on the preconfigured parameter and the candidate configuration parameters.

When the UE switches from the RRC connected state to an RRC inactive state, the UE measures candidate reference signals based on the candidate configuration parameters. After obtaining, through measurement, a first candidate reference signal that meets a preset condition, the UE uses a signal parameter of the first candidate reference signal as positioning assistance information and sends the positioning assistance information to the gNB. Specifically, the UE encapsulates the positioning assistance information into a random access MSG3 message, so that the UE sends the positioning assistance information to the gNB by using the MSG3 message.

It should be noted herein that when the UE moves within the range of the RNA, if the UE does not move out of a coverage area of the current serving base station, the UE sends the MSG3 message including the positioning assistance information to the current serving base station. If the UE moves out of the coverage area of the current serving base station, the UE sends the MSG3 message including the positioning assistance information to a newly accessed serving base station.

After the current serving base station receives the MSG3 message including the positioning assistance information, the current serving base station demodulates the positioning assistance information to obtain a Cell ID in the positioning assistance information, where the Cell ID is an identifier of each gNB participating in positioning. The current serving base station forwards the positioning assistance information to a corresponding gNB through an Xn interface based on the Cell ID. In this way, each gNB that receives the positioning assistance information can adjust a receive beam based on the positioning assistance information, to ensure that the gNB participating in positioning can accurately receive an uplink SRS of the UE.

It should be noted herein that, for the Xn interface, the 3GPP TS 38.423 protocol (version number: V15.5.0, release time: September 2019) specifies a procedure of communication between gNBs through an Xn interface (Xn application protocol, XnAP). In this application, one process that can carry a UE context ID IE and a positioning assistance data IE needs to be added on a basis of current XnAP Basic Mobility Procedures, where the positioning assistance data IE is a newly added IE used to carry the positioning assistance information.

In a possible design, if the UE encapsulates the positioning assistance information in an MSG3 container, after receiving the MSG3 message, the current serving base station does not demodulate the positioning assistance information encapsulated in the MSG3 container. The current serving base station directly transparently transmits the positioning assistance information encapsulated in the MSG3 container to an LMF, and then forwards, by using the LMF, the positioning assistance information to each gNB participating in positioning, to ensure that each gNB participating in positioning can quickly adjust a receive beam of the uplink SRS.

### Embodiment 3

In Embodiment 3, this application provides a signal processing method. The method includes: receiving a random access MSG3 message that is sent by a terminal in an RRC inactive state and that includes positioning assistance information; and forwards the positioning assistance information to each base station participating in positioning, so that each base station participating in positioning adjusts a receive beam based on the positioning assistance information. After adjusting a beam direction of an uplink SRS by using a signal parameter of a candidate reference signal, the terminal in the RRC inactive state sends, in a timely manner, the signal parameter as the positioning assistance information to each gNB participating in positioning, so that the gNB participating in positioning adjusts a receive beam of the uplink SRS in a timely manner based on the positioning assistance information, to ensure that the gNB can effectively receive the uplink SRS.

Refer to FIG. 8. An embodiment of this application provides a signal processing method. The method includes the following steps.

S81: Receive a random access MSG3 message that is sent by a terminal in an RRC inactive state and that includes positioning assistance information.

First, if the UE does not switch a base station, to ensure that the UE can measure a reference signal based on a preconfigured parameter and candidate configuration parameters, a current serving base station generates RRC signaling including the pre-configured parameter and the candidate configuration parameters, and delivers the RRC signaling to the UE when the UE is in an RRC connected state. The preconfigured parameter and the candidate configuration parameters may be configured in either manner in FIG. 5 or FIG. 6. Details are not described herein again.

If the UE switches a base station within a range of an RNA, that is, switches from accessing a previous serving base station to accessing the current serving base station, the RRC signaling including the preconfigured parameter and the candidate configuration parameters is delivered by the previous serving base station.

In addition, a gNB delivers an SSB reference signal in a beam scanning manner. Therefore, by using a beam direction of a reference signal corresponding to the preconfigured parameter, beam directions of the candidate configuration parameters are separately extended to two sides. Therefore, the reference signals corresponding to the candidate configuration parameters can cover a part that cannot be covered by the first reference signal, thereby ensuring that the UE can measure the candidate reference signals based on the candidate configuration parameters when moving in all directions within the range of the RNA.

S82: Forward the positioning assistance information to each base station participating in positioning.

When the UE switches from the RRC connected state to an RRC inactive state, the UE measures candidate reference signals based on the candidate configuration parameters. After obtaining, through measurement, a first candidate reference signal that meets a preset condition, the UE uses a signal parameter of the first candidate reference signal as positioning assistance information and sends the positioning assistance information to the current serving base station. Specifically, the UE encapsulates the positioning assistance information into a random access MSG3 message, so that the UE sends the positioning assistance information to the current serving base station by using the MSG3 message.

It should be noted herein that when the UE moves within the range of the RNA, if the UE does not move out of a coverage area of the current serving base station, the UE sends the MSG3 message including the positioning assistance information to the current serving base station. If the UE moves out of the coverage area of the current serving base station, the UE sends the MSG3 message including the positioning assistance information to a newly accessed serving base station.

After the current serving base station receives the MSG3 message including the positioning assistance information, the current serving base station demodulates the positioning assistance information to obtain a Cell ID in the positioning assistance information, where the Cell ID is an identifier of each gNB participating in positioning. The current serving base station forwards the positioning assistance information to a corresponding gNB through an Xn interface based on the Cell ID. In this way, each gNB that receives the positioning assistance information can adjust a receive beam based on the positioning assistance information, to ensure that the gNB participating in positioning can accurately receive an uplink SRS of the UE.

It should be noted herein that, for the Xn interface, the 3GPP TS 38.423 protocol (Xn application protocol, XnAP) specifies a procedure of communication between gNBs through an Xn interface. In this application, one process that can carry a UE context ID IE and a positioning assistance data IE needs to be added on a basis of current XnAP Basic Mobility Procedures, where the positioning assistance data IE is a newly added IE used to carry the positioning assistance information.

In a possible design, if the UE encapsulates the positioning assistance information in an MSG3 container, after receiving the MSG3 message, the current serving base station does not demodulate the positioning assistance information encapsulated in the MSG3 container. The current serving base station directly forwards the positioning assistance information encapsulated in the MSG3 container to an LMF, and then forwards, by using the LMF, the positioning assistance information to each gNB participating in positioning, to ensure that each gNB participating in positioning can quickly adjust a receive beam of the uplink SRS.

### Embodiment 4

In Embodiment 1 to Embodiment 3, the technical solutions provided in this application are mainly described on a terminal side and a base station side. The following describes the technical solutions in this application by providing a process of information exchange between a terminal and a base station.

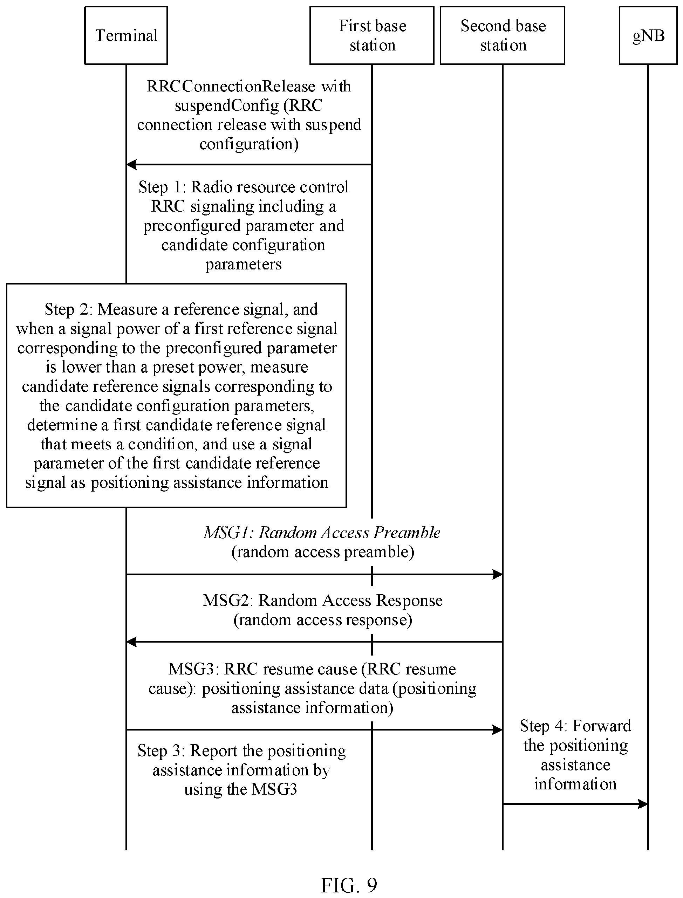

Refer to FIG. 9. The process of information exchange between a terminal and a base station is as follows.

Step 1: A first base station delivers, to the terminal, radio resource control RRC signaling including a preconfigured parameter and candidate configuration parameters.

The first base station delivers the RRC signaling to the terminal when the terminal is in an RRC connected state. A specific process of delivering the RRC signaling by the terminal herein is described in detail in Embodiment 2 and Embodiment 3. Details are not described herein again.

Step 2: The terminal measures a reference signal, and when a signal power of a first reference signal corresponding to the preconfigured parameter is lower than a preset power, measures candidate reference signals corresponding to the candidate configuration parameters, determines a first candidate reference signal that meets a condition, and uses a signal parameter of the first candidate reference signal as positioning assistance information.

After the terminal switches from the RRC connected state to an RRC inactive state, when the terminal in the RRC inactive state obtains, through measurement, that the signal power of the first reference signal is less than the preset power, the terminal measures the candidate reference signals by using the candidate configuration parameters, and then selects a candidate reference signal that meets the preset condition. A process in which the terminal determines the first candidate reference signal is described in detail in Embodiment 1 of this application. Details are not described herein again.

After determining the first candidate reference signal, the terminal adjusts a beam direction and/or a signal power of an uplink SRS based on the signal parameter of the first candidate reference signal. A specific process in which the terminal adjusts the uplink SRS is described in Embodiment 1. Details are not described herein again.

Step 3: The terminal encapsulates the positioning assistance information into an MSG3, and reports the positioning assistance information to a second base station by using the MSG3.

It should be noted herein that FIG. 9 includes the first base station and the second base station, and the first base station and the second base station may be a same base station, or may be different base stations. Specifically, when the terminal within a range of an RNA does not move out of a coverage area of the first base station, the second base station and the first base station are a same base station; and when the terminal moves out of the coverage area of the first base station, the second base station and the first base station are different base stations.

Step 4: The second base station forwards the positioning assistance information to each gNB participating in positioning.

In this embodiment of this application, after receiving the MSG3, the second base station demodulates the positioning assistance information, and forwards, through an Xn interface based on a base station identifier Cell ID in the positioning assistance information, the positioning assistance information to each gNB participating in positioning.

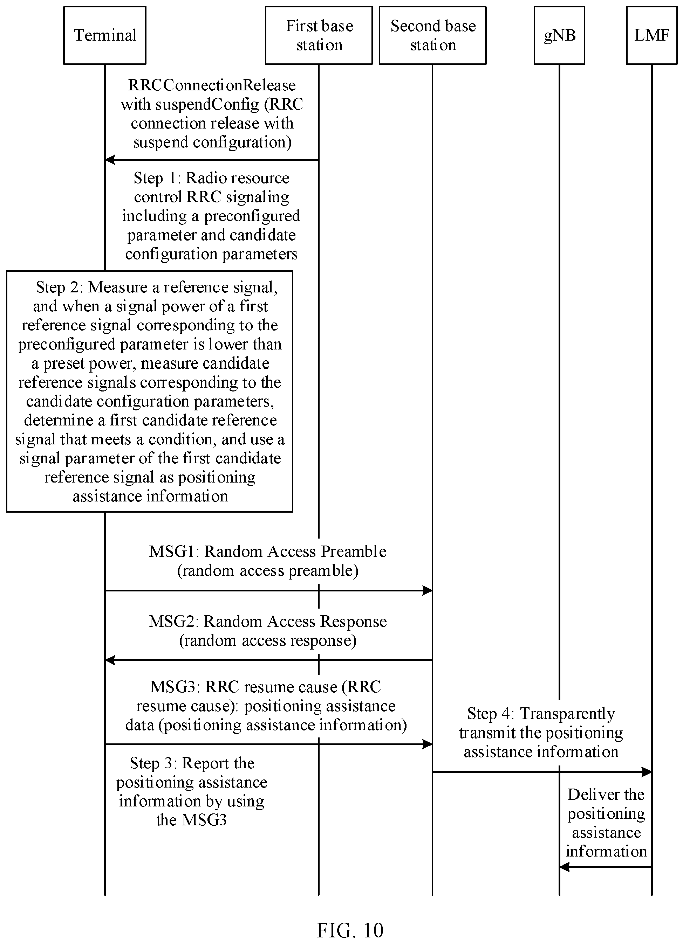

In a possible design, if the terminal encapsulates the positioning assistance information into an MSG3 container, the second base station does not demodulate the positioning assistance information, but directly transparently transmits the positioning assistance information to an LMF, as shown in FIG. 10. In FIG. 10, the second base station transparently transmits, to the LMF, the positioning assistance information encapsulated in the container. Then, the LMF forwards the positioning assistance information to each gNB participating in positioning.

Based on the foregoing method, without switching the status, the terminal in the RRC inactive state measures the candidate reference signals by using the candidate configuration parameters, and adjusts the beam direction of the uplink SRS based on the candidate reference signal, to ensure that terminal can send the uplink SRS in an accurate beam direction. In addition, the terminal sends, as the positioning assistance information, the signal parameter corresponding to the candidate reference signal to each gNB participating in positioning, thereby ensuring that the gNB participating in positioning can adjust a receive beam of the uplink SRS in a timely manner. In this way, positioning of the UE in the RRC inactive state is implemented.

With reference to the accompanying drawings, the following describes apparatuses configured to implement the foregoing methods in embodiments of this application. Therefore, all the foregoing content may be used in the following embodiments. Repeated content is not described again.

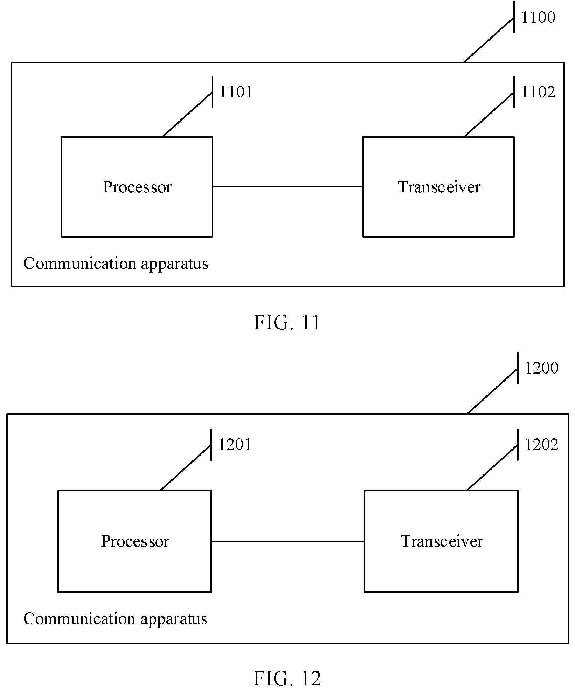

FIG. 11 is a schematic diagram of a structure of a communication apparatus 1100. The communication apparatus 1100 may implement functions of the terminal described above. The communication apparatus 1100 may be the terminal described above, or may be a chip disposed in the terminal described above. The communication apparatus 1100 may include a processor 1101 and a transceiver 1102. The transceiver 1102 may be configured to perform S41 in the embodiment shown in FIG. 4, and/or configured to support another process of the technology described in this specification. The processor 1101 may be configured to perform S40 and S42 in the embodiment shown in FIG. 4, and/or configured to support another process of the technology described in this specification.

For example, the processor 1101 is configured to: when a terminal in an RRC inactive state detects that a first signal power of a first reference signal is less than a preset power, measure candidate reference signals corresponding to candidate configuration parameters, and determine, from the candidate reference signals, a first candidate reference signal that meets a preset condition; and determine a transmit beam of an uplink positioning reference signal based on a signal parameter of the first candidate reference signal, and/or determine a transmit power of the uplink positioning reference signal based on a signal power measurement result of the first candidate reference signal.

The transceiver 1102 is configured to send the signal parameter of the first candidate reference signal to a first serving base station.

All related content of the steps in the foregoing method embodiments may be cited in function descriptions of corresponding functional modules. Details are not described herein again.

FIG. 12 is a schematic diagram of a structure of a communication apparatus 1200. The communication apparatus 1200 may implement functions of the terminal described above. The communication apparatus 1200 may be the terminal described above, or may be a chip disposed in the terminal described above. The communication apparatus 1200 may include a processor 1201 and a transceiver 1202. The transceiver 1202 may be configured to perform S72 in the embodiment shown in FIG. 7, and/or configured to support another process of the technology described in this specification. The processor 1201 may be configured to perform S71 in the embodiment shown in FIG. 7, and/or configured to support another process of the technology described in this specification.

For example, the processor 1201 is configured to: when a terminal is in an RRC connected state, generate, by a current serving base station, radio resource control RRC signaling including a preconfigured parameter and candidate configuration parameters.

The transceiver 1102 is configured to deliver the RRC signaling to the terminal.

All related content of the steps in the foregoing method embodiments may be cited in function descriptions of corresponding functional modules. Details are not described herein again.

In addition, the communication apparatus 1100 shown in FIG. 11 may be alternatively implemented in another manner. For example, the communication apparatus includes a processing module and a transceiver module. For example, the communication apparatus includes a processing module and a transceiver module. For example, the processing module may be implemented through the processor 1101, and the transceiver module may be implemented through the transceiver 1102. The transceiver module may be configured to perform S41 in the embodiment shown in FIG. 4, and/or configured to support another process of the technology described in this specification. The processing module may be configured to perform S40 and S42 in the embodiment shown in FIG. 4, and/or configured to support another process of the technology described in this specification.

For example, the processing module is configured to: when a terminal in an RRC inactive state detects that a first signal power of a first reference signal is less than a preset power, measure candidate reference signals corresponding to candidate configuration parameters, and determine, from the candidate reference signals, a first candidate reference signal that meets a preset condition; and determine a transmit beam of an uplink positioning reference signal based on a signal parameter of the first candidate reference signal, and/or determine a transmit power of the uplink positioning reference signal based on a signal power measurement result of the first candidate reference signal.

The transceiver module is configured to send the signal parameter of the first candidate reference signal to a first serving base station.

All related content of the steps in the foregoing method embodiments may be cited in function descriptions of corresponding functional modules. Details are not described herein again.

In addition, the communication apparatus 1200 shown in FIG. 12 may be alternatively implemented in another manner. For example, the communication apparatus includes a processing module and a transceiver module. For example, the communication apparatus includes a processing module and a transceiver module. For example, the processing module may be implemented by the processor 1201, and the transceiver module may be implemented by the transceiver 1202. The transceiver module may be configured to perform S72 in the embodiment shown in FIG. 7, and/or configured to support another process of the technology described in this specification. The processing module may be configured to perform S71 in the embodiment shown in FIG. 7, and/or configured to support another process of the technology described in this specification.

For example, the processing module is configured to: when a terminal is in an RRC connected state, generate, by a current serving base station, radio resource control RRC signaling including a preconfigured parameter and candidate configuration parameters.

The transceiver module is configured to deliver the RRC signaling to the terminal.

All related content of the steps in the foregoing method embodiments may be cited in function descriptions of corresponding functional modules. Details are not described herein again.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

## Claims

1. A configuration parameter update method, wherein the method comprises:
when detecting that a first signal power of a first reference signal is less than a preset power, measuring (S40), by a terminal (1301, 1302) in an inactive state, candidate reference signals corresponding to candidate configuration parameters;
determining (S41), from the candidate reference signals, a first candidate reference signal that meets a preset condition, and sending (S41) a signal parameter of the first candidate reference signal to a first serving base station; and
determining (S42) a transmit beam of an uplink positioning reference signal based on the signal parameter of the first candidate reference signal, and/or determining (S42) a transmit power of the uplink positioning reference signal based on a signal power measurement result of the first candidate reference signal.

2. The method according to claim 1, wherein the sending (S41) a signal parameter of the first candidate reference signal to a first serving base station is specifically:
when in a radio access network-based notification area, RNA, switching, by the terminal (1301, 1302) in the inactive state, from accessing a previous serving base station to accessing the first serving base station, and sending the signal parameter of the first candidate reference signal to the first serving base station.

3. The method according to claim 1, wherein the sending (S41) a parameter of the first candidate reference signal in the candidate reference signals to a first serving base station comprises:
adding the signal parameter of the first candidate reference signal as positioning assistance information to a random access MSG3 message, wherein the positioning assistance information is used to help a base station participating in positioning determine a receive beam of the uplink positioning reference signal; and
sending (S81) the positioning assistance information to the first serving base station by using the random access MSG3 message.

4. The method according to claim 3, wherein the adding the parameter of the first candidate reference signal as positioning assistance information to a random access MSG3 message comprises:
encapsulating the positioning assistance information in an MSG3 container, wherein the first serving base station does not demodulate the positioning assistance information.

5. The method according to claim 1, wherein before the measuring (S40) candidate reference signals corresponding to candidate reference configuration parameters, the method further comprises:
when the terminal (1301, 1302) is in a connected state, receiving (S71) radio resource control, RRC signaling that comprises a preconfigured parameter and the candidate configuration parameters and that is delivered by a second serving base station, wherein the preconfigured parameter is used to measure the first reference signal, and the candidate configuration parameters are used to measure the candidate reference signals.

6. The method according to claim 5, wherein the preconfigured parameter comprises a cell identifier, an SSB index, and SSB configuration information, wherein the SSB configuration information comprises an SSB time-frequency resource location, a period, and a power parameter; and the candidate configuration parameter comprises an SSB index different from that of the preconfigured parameter.

7. The method according to claim 1, wherein the determining (S41), from the candidate reference signals, a first candidate reference signal that meets a preset condition comprises:
measuring signal powers of all the candidate reference signals corresponding to the candidate configuration parameters; and
determining a candidate reference signal corresponding to a maximum signal power among all the signal powers, and determining the candidate reference signal corresponding to the maximum signal power as the first candidate reference signal.

8. A communication apparatus (1100), comprising a processor (1101) and a transceiver (1102), wherein the processor is coupled to the transceiver, and is configured to perform the method according to any one of claims 1 to 7.

9. A computer-readable storage medium, when a computer reads and executes the computer-readable instructions, the computer is enabled to perform the method according to any one of claims 1-7.

10. A computer program product, when a computer reads and executes the computer program product, the computer is enabled to perform the method according to any one of claims 1-7.

## Patentansprüche

1. Verfahren zur Aktualisierung von Konfigurationsparametern, wobei das Verfahren Folgendes umfasst:
Messen (S40) von möglichen Referenzsignalen entsprechend möglichen Konfigurationsparametern durch ein Endgerät (1301, 1302) in einem inaktiven Zustand, wenn erkannt wird, dass eine erste Signalleistung eines ersten Referenzsignals geringer ist als eine voreingestellte Leistung;
Bestimmen (S41) eines ersten möglichen Referenzsignals, das eine voreingestellte Bedingung erfüllt, aus den möglichen Referenzsignalen und Senden (S41) eines Signalparameters des ersten möglichen Referenzsignals an eine erste bedienende Basisstation und
Bestimmen (S42) eines Sendestrahls eines Uplink-Positionierungsreferenzsignals basierend auf dem Signalparameter des ersten möglichen Referenzsignals und/oder Bestimmen (S42) einer Sendeleistung des Uplink-Positionierungsreferenzsignals basierend auf einem Signalleistungsmessergebnis des ersten möglichen Referenzsignals.

2. Verfahren nach Anspruch 1, wobei das Senden (S41) eines Signalparameters des ersten möglichen Referenzsignals an eine erste bedienende Basisstation insbesondere Folgendes ist:
wenn in einem auf einem Funkzugangsnetzwerk basierenden Benachrichtigungsbereich (RNA), Umschalten vom Zugreifen auf eine vorherige bedienende Basisstation auf Zugreifen auf die erste bedienende Basisstation durch das Endgerät (1301, 1302) in dem inaktiven Zustand und Senden des Signalparameters des ersten möglichen Referenzsignals an die erste bedienende Basisstation.

3. Verfahren nach Anspruch 1, wobei das Senden (S41) eines Parameters des ersten möglichen Referenzsignals der möglichen Referenzsignale an eine erste bedienende Basisstation Folgendes umfasst:
Hinzufügen des Signalparameters des ersten möglichen Referenzsignals als Positionierungsunterstützungsinformation zu einer Random-Access-MSG3-Nachricht, wobei die Positionierungsunterstützungsinformation verwendet wird, um einer an der Positionierung beteiligten Basisstation dabei zu helfen, einen Empfangsstrahl des Uplink-Positionierungsreferenzsignals zu bestimmen, und
Senden (S81) der Positionierungsunterstützungsinformation an die erste bedienende Basisstation unter Verwendung der Random-Access-MSG3-Nachricht.

4. Verfahren nach Anspruch 3, wobei das Hinzufügen des Parameters des ersten möglichen Referenzsignals als Positionierungsunterstützungsinformation zu einer Random-Access-MSG3-Nachricht Folgendes umfasst:
Einkapseln der Positionsunterstützungsinformationen in einem MSG3-Container, wobei die erste bedienende Basisstation die Positionsunterstützungsinformationen nicht demoduliert.

5. Verfahren nach Anspruch 1, wobei das Verfahren vor dem Messen (S40) von möglichen Referenzsignalen entsprechend möglichen Referenzkonfigurationsparametern ferner Folgendes umfasst:
wenn das Endgerät (1301, 1302) in einem verbundenen Zustand ist, Empfangen (S71) einer Funkressourcensteuerungs-(RRC-)Signalisierung, die einen vorkonfigurierten Parameter und die möglichen Konfigurationsparameter umfasst und die von einer zweiten bedienenden Basisstation geliefert wird, wobei der vorkonfigurierte Parameter verwendet wird, um das erste Referenzsignal zu messen und die möglichen Konfigurationsparameter verwendet werden, um die möglichen Referenzsignale zu messen.

6. Verfahren nach Anspruch 5, wobei der vorkonfigurierte Parameter eine Zellenkennung, einen SSB-Index und SSB-Konfigurationsinformationen umfasst, wobei die SSB-Konfigurationsinformationen einen SSB-Zeit-Frequenz-Ressourcenstandort, einen Zeitraum und einen Leistungsparameter umfassen und der mögliche Konfigurationsparameter einen SSB-Index umfasst, der sich von dem des vorkonfigurierten Parameters unterscheidet.

7. Verfahren nach Anspruch 1, wobei das Bestimmen (S41) eines ersten möglichen Referenzsignals, das eine voreingestellte Bedingung erfüllt, aus den möglichen Referenzsignalen Folgendes umfasst:
Messen der Signalleistungen aller möglichen Referenzsignale entsprechend den möglichen Konfigurationsparametern, und
Bestimmen eines möglichen Referenzsignals entsprechend einer maximalen Signalleistung unter allen Signalleistungen und
Bestimmen des möglichen Referenzsignals entsprechend der maximalen Signalleistung als das erste mögliche Referenzsignal.

8. Kommunikationsvorrichtung (1100), umfassend einen Prozessor (1101) und einen Sendeempfänger (1102), wobei der Prozessor mit dem Sendeempfänger gekoppelt ist und ausgelegt ist, um das Verfahren nach einem der Ansprüche 1 bis 7 durchzuführen.

9. Computerlesbares Speichermedium, wobei der Computer, wenn ein Computer die computerlesbaren Anweisungen liest und ausführt, befähigt ist, das Verfahren nach einem der Ansprüche 1-7 durchzuführen.

10. Computerprogrammprodukt, wobei der Computer, wenn ein Computer das Computerprogrammprodukt liest und ausführt, befähigt ist, das Verfahren nach einem der Ansprüche 1-7 durchzuführen.

## Revendications

1. Procédé de mise à jour de paramètres de configuration, dans lequel le procédé comprend :
lors de la détection qu'une première intensité de signal d'un premier signal de référence est inférieure à une intensité prédéfinie, la mesure (S40), par un terminal (1301, 1302) dans un état inactif, de signaux de référence candidats correspondant à des paramètres de configuration candidats ;
la détermination (S41), à partir des signaux de référence candidats, d'un premier signal de référence candidat qui satisfait une condition prédéfinie, et l'envoi (S41) d'un paramètre de signal du premier signal de référence candidat à une première station de base de desserte ; et
la détermination (S42) d'un faisceau de transmission d'un signal de référence de positionnement de liaison montante sur la base du paramètre de signal du premier signal de référence candidat,
et/ou la détermination (S42) d'une intensité de transmission du signal de référence de positionnement de liaison montante sur la base d'un résultat de mesure d'intensité de signal du premier signal de référence candidat.

2. Procédé selon la revendication 1, dans lequel l'envoi (S41) d'un paramètre de signal du premier signal de référence candidat à une première station de base de desserte comprend spécifiquement :
lorsqu'on se trouve dans une zone de notification basée sur un réseau d'accès radio, ARN, la commutation, par le terminal (1301, 1302) dans l'état inactif, de l'accès à une station de base de desserte précédente à l'accès à la première station de base de desserte, et l'envoi du paramètre de signal du premier signal de référence candidat à la première station de base de desserte.

3. Procédé selon la revendication 1, dans lequel l'envoi (S41) d'un paramètre du premier signal de référence candidat parmi les signaux de référence candidats à une première station de base de desserte comprend :
l'ajout du paramètre de signal du premier signal de référence candidat comme informations d'assistance au positionnement à un message MSG3 à accès aléatoire, dans lequel les informations d'assistance au positionnement sont utilisées pour aider une station de base participant au positionnement à déterminer un faisceau de réception du signal de référence de positionnement de liaison montante ; et
l'envoi (S81) des informations d'assistance au positionnement à la première station de base de desserte en utilisant le message MSG3 à accès aléatoire.

4. Procédé selon la revendication 3, dans lequel l'ajout du paramètre du premier signal de référence candidat comme informations d'assistance au positionnement à un message MSG3 à accès aléatoire comprend :
l'encapsulation des informations d'assistance au positionnement dans un conteneur MSG3, dans lequel la première station de base de desserte ne démodule pas les informations d'assistance au positionnement.

5. Procédé selon la revendication 1, dans lequel, avant la mesure (S40) de signaux de référence candidats correspondant à des paramètres de configuration de référence candidats, le procédé comprend également :
lorsque le terminal (1301, 1302) est dans un état connecté, la réception (S71) d'une signalisation de commande de ressources radio, RRC, qui comprend un paramètre préconfiguré et les paramètres de configuration candidats et qui est délivrée par une seconde station de base de desserte, dans lequel le paramètre préconfiguré est utilisé pour mesurer le premier signal de référence, et les paramètres de configuration candidats sont utilisés pour mesurer les signaux de référence candidats.

6. Procédé selon la revendication 5, dans lequel le paramètre préconfiguré comprend un identifiant de cellule, un indice SSB et des informations de configuration SSB, dans lequel les informations de configuration SSB comprennent un emplacement de ressource temps-fréquence SSB, une période et un paramètre d'intensité ; et le paramètre de configuration candidat comprend un indice SSB différent de celui du paramètre préconfiguré.

7. Procédé selon la revendication 1, dans lequel la détermination (S41), parmi les signaux de référence candidats, d'un premier signal de référence candidat satisfaisant à une condition prédéfinie comprend :
la mesure d'intensités de signal de tous les signaux de référence candidats correspondant aux paramètres de configuration candidats ; et
la détermination d'un signal de référence candidat correspondant à une intensité de signal maximale parmi toutes les intensités de signal, et la détermination du signal de référence candidat correspondant à l'intensité de signal maximale comme premier signal de référence candidat.

8. Appareil de communication (1100), comprenant un processeur (1101) et un émetteur-récepteur (1102), dans lequel le processeur est couplé à l'émetteur-récepteur et configuré pour réaliser le procédé selon l'une quelconque des revendications 1 à 7.

9. Support de stockage lisible par ordinateur, lorsqu'un ordinateur lit et exécute les instructions lisibles par ordinateur, l'ordinateur est activé pour réaliser le procédé selon l'une quelconque des revendications 1 à 7.

10. Produit de programme informatique, lorsqu'un ordinateur lit et exécute le produit de programme informatique, l'ordinateur est activé pour réaliser le procédé selon l'une quelconque des revendications 1 à 7.
